# EUROPEAN PATENT APPLICATION

(11) **EP 2 244 322 A1**
(43) Date of publication of application: **27.10.2010**
(21) Application number: 09005779.5
(22) Date of filing: 24.04.2009
(51) Int. Cl.: H01M 4/86, H01M 4/88, H01M 4/90, H01M 8/12

(54) **Composite oxygen electrode and method for preparing same**

(71) Applicant: Technical University of Denmark, 2800 Kgs. Lyngby (DK)
(72) Inventor: Mogensen, Mogens, 3540 Lynge (DK); Hjalmarsson, Per, 21157 Malmö (SE); Wandel, Marie, 2730 Herlev (DK)
(74) Representative: Grünecker, Kinkeldey, Stockmair & Schwanhäusser Anwaltssozietät

(57) **Abstract**

The present invention provides a composite oxygen electrode, comprising
- a porous backbone structure comprising two separate but percolating phases, the first phase being an electronic conducting phase, the second phase being an oxide ion conducting phase; and
- an electrocatalytic layer on the surface of said backbone structure, wherein said electrocatalytic layer comprises first and second nanoparticles, wherein the first and second particles are randomly distributed throughout said layer.

The present invention further comprises a method of producing the above composite electrode, comprising the steps of:
- forming a porous backbone structure comprising two separate but percolating phases, the first phase being an electronic conducting phase, the second phase being an oxide ion conducting phase; and
- applying an electrocatalytic layer on the surface of said backbone structure, wherein said electrocatalytic layer comprises first and second nanoparticles, wherein the first and second particles are randomly distributed throughout said layer.

## Description

### Technical field

The present invention relates to a composite oxygen electrode, and to a method for preparing same.

### Background art

Solid oxide cells (SOC's) are well known in the art and come in various designs. Typical configurations include a flat plate design and a tubular design, wherein an electrolyte layer is sandwiched between two electrode layers. During operation, usually at a temperature from 500°C to 1100°C, one electrode is in contact with oxygen or air and the other electrode is in contact with a fuel gas. Solid oxide cells include solid oxide fuel cells (SOFC's) and solid oxide electrolysis cells (SOEC's).

A 'reversible' solid oxide fuel cell is a fuel cell that can consume a fuel gas, such as hydrogen, to produce electricity, and can be reversed so as to consume electricity to produce a gas. Typically, a hydrogen fuel cell, for example, uses hydrogen (H₂) and oxygen (O₂) to produce electricity and water (H₂O); a reversible hydrogen fuel cell could also use electricity and water to produce hydrogen and oxygen gas. Due to the identical layer design of the cell, the same cell may therefore be in principle used for both applications, and is consequently referred to as a 'reversible' cell.

Several properties are required for the SOC's, such as high conductivity, a large area of electrochemically active sites at the electrode/electrolyte interface, chemical and physical stability over a wide range of fuel atmospheres, and minimal microstructural changes with operating time, since such changes are often accompanied by deterioration of electrical performance.

A wide range of material properties for SOFC cathodes and SOEC anodes (the oxygen electrodes) is required in order to operate the cell with a sufficient life time as demanded by the industry today. Most notably, the oxygen electrodes require high ionic conductivity, high electronic conductivity, good catalytic activity towards oxygen reduction, a thermal expansion coefficient (TEC) that matches the TEC of the other materials of the cell, thermal stability, and chemical stability.

Up to date, the prior art focussed on materials having as many of the above requirements as possible. For example, mixed ionic and electronic conductors (MIECs) have been intensively studied. However, while MIEC materials have promising electronic and ionic conductivity properties, the materials disadvantageously have a rather high TEC and insufficient thermal and chemcial stability, which result in an overall shortened life time of the cell.

WO 2006/082057 A relates to a method for producing a solid oxide fuel cell, comprising the steps of:
- providing a metallic support layer;
- forming a cathode precursor layer on the metallic support layer;
- forming an electrolyte layer on the cathode precursor layer;
- sintering the obtained multilayer structure; .
- impregnating the cathode precursor layer so as to form a cathode layer; and
- forming an anode layer on top of the electrolyte layer.

The metallic support layer preferably comprises a FeCr alloy and from about 0 to about 50 vol% metal oxides, such as doped zirconia, doped ceria, Al₂O₃, TiO₂, MgO, CaO, and Cr₂O₃. Furthermore, the cathode layer preferably comprises a material selected from the group consisting of doped zirconia, doped ceria, lanthanum strontium manganate, lanthanide strontium manganate, lanthanide strontium iron cobalt oxide, (Y₁₋ₓCaₓ)Fe_{1-y}Co_{y}O₃, (Gd₁₋ₓSrₓ)Fe_{1-y}CO_{y}O₃, (Gd₁₋ₓCaₓ)Fe_{1-y}CO_{y}O₃, and mixtures thereof.

However, although the finally obtained cathode is a mixed composite material including an electronic conducting material and an oxide ion conducting material, impregnated with a catalyst material, said structure has drawbacks in the electronic conducting material and the oxide ion conducting material merely being macroscopically mixed, but still exhibiting a large conductivity restriction due to closed pores and insufficient contact between the phases, resulting in an electrical performance which is still not sufficient for many industrial applications. It further relies on a metallic support which may pose corrosion problems when the cell is operated at high temperatures.

EP-A-1760817 relates to a reversible solid oxide fuel cell monolithic stack comprising:
- a first component which comprises at least one porous metal containing layer (1) with a combined electrolyte and sealing layer (4) on the porous metal containing layer (1); wherein the at least one porous metal containing layer hosts an electrode;
- a second component comprising at least one porous metal containing layer (1) with an interconnect and sealing layer (5) on the porous metal containing layer (1); wherein the at least one porous metal containing layer (1) hosts an electrode.

The obtained cathode layer is preferably a FeCrMa alloy layer, which may contain doped ceria or doped zirconia. However, the obtained backbone structure of the electrode still exhibits a large conductivity restriction due to closed pores and insufficient contact between the phases, resulting in an electrical performance which is still not sufficient for many industrial applications. It further relies on a metallic support which may pose corrosion problems when the cell is operated at high temperatures.

### Summary

In view of the difficulties of the electrodes suggested in the prior art, it was the object of the present invention to provide an improved oxygen electrode for solid oxide cells, and a method for producing said electrode.

Said object is achieved by a composite oxygen electrode, comprising
- a porous backbone structure comprising two separate but percolating phases, the first phase being an electronic conducting phase, the second phase being an oxide ion conducting phase; and
- an electrocatalytic layer on the surface of said backbone structure, wherein said electrocatalytic layer comprises first and second nanoparticles, wherein the first and second particles are randomly distributed throughout said layer.

Said object is further achieved by a method of producing the above composite electrode, comprising the steps of:
- forming a porous backbone structure comprising two separate but percolating phases, the first phase being an electronic conducting phase, the second phase being an oxide ion conducting phase; and
- applying an electrocatalytic layer on the surface of said backbone structure, wherein said electrocatalytic layer comprises first and second nanoparticles, wherein the first and second particles are randomly distributed throughout said layer.

Preferred embodiments are set forth in the subclaims and the following detailed description.

### Brief description of the drawing

Figure 1 is a three dimensional illustration showing the specific structure of the electrode in accordance with the present invention.
Figure 2 is a scanning electron microscope (SEM) image of the specific structure in accordance with the present invention.

### Detailed description of the invention

The present invention provides a composite oxygen electrode, comprising
- a porous backbone structure comprising two separate but percolating phases, the first phase being an electronic conducting phase, the second phase being an oxide ion conducting phase; and
- an electrocatalytic layer on the surface of said backbone structure, wherein said electrocatalytic layer comprises first and second nanoparticles, wherein the first and second particles are randomly distributed throughout said layer.

Advantageously, the composite electrode comprises different materials, wherein each material provides one or more important required electrode properties, so as to satisfy the requirements of an oxygen electrode. Due to the specific mixture of the materials and the structure of the electrode, the advantages of each material can be maintained without suffering drawbacks such as chemical or thermal instabilities, or a reduced life time of the cell.

Furthermore, the oxygen electrode for a solid oxide cell as provided by the present invention exhibits a high activity and a TEC matching the TEC of the other materials of the cell. This in turn reduces the polarisation resistance and enables lower operating temperatures;

Moreover, more optimised material compositions may be employed, as multiple materials are combined instead of using one material with multiple properties only. A careful choice of the constituting materials and the optimised microstructure will result in a higher activity, and in return in a longer lifetime of the cell.

### - Backbone structure

More specifically, the composite electrode includes four, or, if the gas phase is also considered, five phases. The electrode comprises a backbone structure of a percolated oxide phase of an ionic conducting phase, and an electronic conducting phase. 'Percolated' in the sense of the present invention means an intensely mixed and intermingled structure of the ionic and electronic phase without any phase separation throughout the backbone so that almost all electronically conducting particles are in contact with each other, and likewise so are the ionic conducting particles. Due to the percolation, the two phases form a locally dense, i.e. non-porous, composite material which does essentially not have any porosity between the grains of the ionic conducting phase, and between the grains of the electronic conducting phase, contrary to the backbone prior art. This means that the phases does not contain any or little closed pores, which would restrict conductivity without supplying the necessary pathways for oxygen diffusion. This dense structure formed of the two phases is pervaded by gas diffusion passageways, i.e. open gas channels, resulting in overall more three phase boundaries between the ionic conducting phase, the electronic conducting phase, and the gas phase on the surface of the dense structure, thereby vastly improving the electrical performance of the electrode.

The open gas channels provide the backbone structure overall with porosity. While the grains of the ionic conducting phase, and the grains of the electronic conducting phase in between themselves do not have any porosity, the overall obtained percolated structure of course comprises open gas channels being formed between non-porous grains of the ionic conducting phase, and the non-porous grains of the electronic conducting phase.

The porosity of the backbone structure can be determined with the mercury intrusion method described in chapter 4 in "Analytical Methods in Fine Particle Technology" by Paul Webb and Clyde Orr, published by Micromeritics Instrument Cooperation, GA, UAS, 1997.

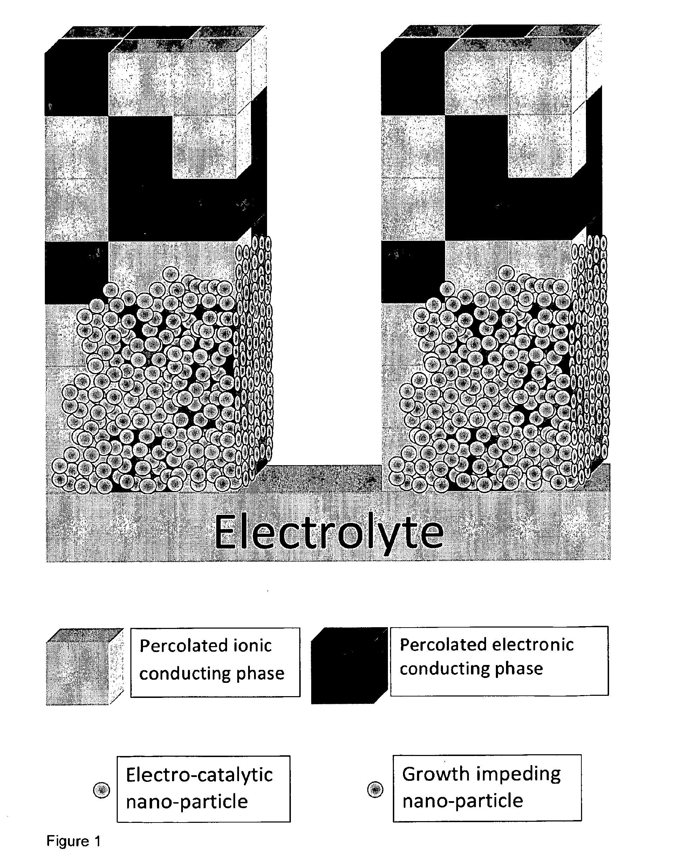

The specific advantageous composite structure of the present invention is illustrated in Figure 1, schematically showing the backbone and the nanoparticles forming the specific structure of the electrode in contact with the electrolyte. The non-porous grains of the ionic phase and the non-porous grains of the electronic phase form a percolated structure, i.e. an interpenetrating network. The catalytically active nanoparticles form a thin film randomly distributed on the surface.

The open gas channels forming the gas diffusion pathways moreover advantageously completely pervade through the dense material formed of the grains of the ionic and electronic phase so that gaseous oxygen is transported to the majority of the formed three phase boundaries. In Figure 1, the above backbone structure is shown, wherein the nanoparticles are only shown in the lower part of the electrode to allow a better view of the inner structure. The two 'blocks' forming the electrode in the picture are only schematically drawn for illustration purposes only, and the electrode structure of the electrode is by no means intended to be limited to the illustrated blocks.

In Figure 1, the light grey 'blocks' of the backbone structure represent schematically the percolated non-porous ionic conducting phase, and the dark grey 'blocks' represent schematically the percolated non-porous electronic conducting phase. The nanoparticles are a mixture of electrocatalytic nanoparticles and growth impeding nanoparticles formed on the surface of the backbone structure.

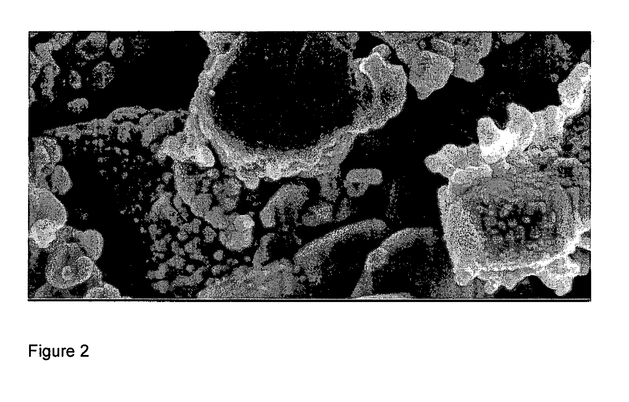

In Figure 2, a SEM image of such a structure is shown. The backbone structure, comprising percolated phases with open gas channels between them providing porosity is clearly visible. On The surface of the percolated phases is covered with nanoparticles.

All electronic conducting particles of the backbone structure of the present invention are in good contact with each other, allowing for a minimal conductivity restriction at the interface between the particles, in return resulting in an increased electrical performance. Furthermore, all ionic conducting particles are in good contact with each other so that the entire phase contributes to a minimal conductivity restriction as well.

Due to the specific structure as described above, the electric and ionic conductivity will be higher than a mixture of said materials as suggested in the prior art, where phase separation occurs and parts of the electrode may have electric conductivity but reduced or no ionic conductivity and vice versa.

How to obtain the above described backbone structure of the invention is furthermore illustrated by the working examples below.

Preferably, a single dense component in the above described backbone structure, i.e. a component of the structure formed by the grains of the ionic and electronic grains without any pores so as to form an interpenetrating network, is preferably in the range of 0.5 to 15 µm, more preferably of from 5 to 10 µm, and most preferably of from 6 to 8 µm.

The average grain size of the ionic conducting particles in the ionic conducting phase and the average grain size of the electronic conducting particles in the electronic conducting phase is preferably in the range of 0.1 to 5 µm, more preferably of from 0.2 to 5 µm, and most preferably of from 0.5 to 1 µm.

Said backbone structure allows the transport of reactants and products, such as oxygen gas, electrons and oxygen ions.

Preferably, the backbone has a TEC close to or matching the TEC of the electrolyte layer of the cell. More preferably, the TEC is smaller than about 1.5 x 10⁻⁵ K⁻¹, and even more preferred is the TEC being smaller than about 1.25 x 10⁻⁵ K⁻¹.

The electronic conductor material is preferably selected from the group consisting of metals and metal alloys, such as stainless steel, La₁₋ₓSrₓMnO₃ (LSM), (Ln₁₋ₓSrₓ)ₛ(Ni₁₋y-_{z}Fe_{z}Coy)O₃ (LSNFC), (Ln₁₋ₓMₓ)ₛTrO₃, (Ln₁₋ₓMₓ)ₛTr₂O₄, or mixtures thereof, with Ln being any or any combination of a lanthanide element, such as La, Pr, Gd, and the like, M is any or any combination of an alkali earth metal, such as Sr, Ca, Ba and the like, and Tr being any or any combination of a transition metal, such as Co, Ni, Mn, Fe, Cu, and the like. Preferred is a suitably selected composition of LSNFC since the constituting metal ions can be chosen to give it a high electronic conductivity and suitable TEC compatible with the other material of the cell.

The material for the ion conducting phase is preferably selected from the group consisting of ion conducting apatites, such as La/Si and La/Ge based apatites, yttria, scandia or gadolinium stabilised zirconia (YSZ), doped lanthanum gallates, and yttria, scandia or gadolinium doped ceria (CGO), with preferred dopants being Gd, Nd, and Sm. Most preferred is gadolinium doped ceria, as it is a good ionic conductor, has a suitable TEC, and is sufficiently chemically inert towards the other components of the cell.

In another preferred embodiment, the thickness of the cathode layer is from 5 to 100 µm, more preferably from 7 to 50 µm, and most preferred of from 10 to 25 µm.

Advantageously, the backbone structure may be prefabricated prior to applying the nanoparticles to assure a good transport of oxide ions and electrons.

### - Electrocatalytic layer

The electrocatalytic layer comprises a catalytically active oxide which forms a thin film of nanoparticles on the backbone structure. The electrocatalytic layer comprises first nanoparticles, which are electrocatalytic active nanoparticles, and second nanoparticles, which are formed from an ion conducting material. Preferably, the first nanoparticles and/or the second nanoparticles have an average particles size of from 0.1 to 500 nm, more preferably of from 0.5 to 300 nm, and most preferably of from 1 to 100 nm. This specific structure increases the amount of three phase boundaries (TPB) where the reaction in the cathode takes place, and thus the activity of the electrode is advantageously enhanced as compared to conventional electrodes.

The material for the catalytically active oxide forming the first nanoparticles is preferably selected from the group consisting of (Ln₁₋ₓSrₓ)ₛCoO₃, with Ln being lanthanum elements such as La, Pr, Nd and the like; x being 0 < x ≤ 1, s being 0.9 < s ≤ 1, (La₁₋ₓMaₓ)ₛCO₁₋y MbO₃ with 0 < x <1, 0 < y < 1; 0.9 s < 1 and La = lanthanide elements, Ma = alkaline earth elements, and Mb = transition metal ions; (Ln₁₋ₓmₓ)ₛTrO₃, (Ln₁₋ₓMₓ)ᵣTr₂O₄, or mixtures thereof, with Ln being any or any combination of a lanthanide element, such as La, Pr, Gd, and the like, M is any or any combination of an alkali earth metal, such as Sr, Ca, Ba and the like, and Tr being any or any combination of a transition metal, such as Co, Ni, Mn, Fe, Cu, and the like; and mixtures thereof.

The material for the ion conducting material forming the second nanoparticles is preferably selected from the group consisting of ion conducting apatites, such as La/Si and La/Ge based apatites, yttria, scandia or gadolinium stabilised zirconia (YSZ), doped lanthanum gallates, and yttria, scandia or gadolinium doped ceria (CGO), with preferred dopants being Gd, Nd, and Sm.

In another embodiment, the present invention provides a method of producing the above composite electrode, comprising the steps of:
- forming a porous backbone structure comprising two separate but percolated phases, the first phase being an electronic conducting phase, the second phase being an oxide ion conducting phase; and
- applying an electrocatalytic layer on the surface of said backbone structure, wherein said electrocatalytic layer comprises first and second nanoparticles, wherein the first and second particles are randomly distributed throughout said layer.

The backbone structure may be obtained by for example screen printing a paste comprising the oxides onto a support layer. Alternatively, spraying or lamination may be employed. he support layer may function as a support layer only, or may later function as one of the functional layers of the solid oxide cell, such as the electrolyte layer. Preferably, the method further comprises a sintering step prior to applying an electrocatalytic layer on the backbone structure. The sintering is carried out at temperatures of from 600°C to 1500°C, preferably from 800°C to 1400°C, and more preferably of from 900 to 1300°C.

The electrocatalytic layer is moreover preferably applied in form of a suspension comprising the first and the second nanoparticles. The backbone structure is covered with the electrocatalytic layer preferably by infiltration. More preferably, the solution comprises a catalyst precursor, such as a nitrate solution of the oxide, and further a structure directing agent and a suitable solvent. Afterwards, a heating step is conducted to form the respective nanoparticles.

In Figure 1, the large structural components represent the backbone structure, the small particles represent the nanoparticles of the electrocatalytic layer. In reality, the nanoparticles are of course much smaller than illustrated, and the scale was enhanced for illustration purposes only.

Advantageously, the oxygen electrode for a solid oxide cell as provided by the present invention exhibits a high activity and a TEC matching the TEC of the other materials of the cell. This in turn reduces the polarisation resistance and enables lower operating temperatures. Furthermore, advantageously the electrode maintains the thermal and chemical stability required for industrial applications, and thus, the electrode contributes to an overall higher lifetime of the cell.

Moreover, optimised material compositions are employed, as multiple materials are combined instead of using one material with multiple properties only. The microstructure can also be optimized, resulting in a higher activity, and in a longer lifetime of the cell.

The present invention provides a composite oxygen electrode having a specific backbone structure comprising:
- a fully percolated ionic conducting phase showing a reduced serial resistance and contact resistance towards the electrolyte material and having improved mechanical strength;
- a fully percolated electronic conducting phase showing a reduced serial resistance and contact resistance towards the electrolyte material and having improved mechanical strength;
- a fully "percolated gas phase", the backbone comprising no or very few closed pores, which reduces mass transport limitations and contributes to the improved activity of the electrode;
and further a thin film on the surface of the backbone structure comprising:
- a first type of nanoparticles providing electrocatalytic activity on the surface of the backbone structure;
- a second type of nanoparticles impeding the growth of the first type of nanoparticles, also providing oxide ion conductivity.

In the following, the present invention will be further illustrated with reference to detailed examples. The invention is however not restricted thereto.

### Examples

### Example 1 - Manufacture of a ceramic composite cathode

Ceramic powder of gadolinium doped ceria (CGO) and nickel doped lanthanum cobaltite LaCo₁₋ₓNiₓO₃ (LCN) are mixed with a volume ratio of approximately 1:1. The powder mixture is then pre-sintered at 1100 °C. The obtained pre-sintered composite powder particles have a particle size of approx. 2-3 µm.

The pre-sintered powder is then mixed into a dispersion with terpineol containing 20% Solsperse3000 as surfactant. The dispersion is ball-milled for 2 hours. Ethylene glucose, polyethylene glycol and graphite are added to the dispersion. The dispersion is finally ball-milled for about 10 minutes.

The obtained slurry dispersion is screen printed onto an electrolyte layer. The printing parameters are set to give a thickness of approx. 25-30 µm. The layer is sintered at 1300 °C for 10 hours in order to form a well percolated and coarse porous composite backbone. The obtained backbone structure of the electrode is illustrated as a SEM image in Figure 2.

Afterwards, the porous backbone structure is filled via vacuum assisted infiltration with an aqueous solution consisting of Pluronic-123 (P-123 supplied by BASF) and La-, Sr- and Co-nitrates in a stoichiometric ratio corresponding to the perovskite, La_{0.6}Sr_{0.4}CoO₃ (LSC). Electrocatalytic nanoparticles of the perovskite phase are then formed on the surface by calcining at 550 °C.

Vacuum assisted infiltration is then used to fill the porous structure with an aqueous solution of cerium nitrate and P-123. Nanoparticles of CeO₂ are formed *in-situ* on the surface of the electrode when operating the fuel cell at higher temperatures. The resulting thin film is a randomly distributed population of catalytically active nanoparticles as illustrated schematically in Figure 1.

### Example 2 - Manufacture of a ceramic composite cathode

To obtain an electrode with a well percolated and coarse porous composite backbone, the same materials and steps are carried out as outlined in Example 1.

Afterwards, the porous backbone structure is filled via vacuum assisted infiltration with an aqueous solution consisting of La_{0.6}Sr_{0.4}CoO₃ and CeO₂ nanoparticles of approximately 20 nm in diameter dispersed in a homogeneous aqueous solution. A film of randomly distributed nanoparticles of both types is formed when sintering them onto the electrode surface *in situ* during cell operation.

### Example 3 - Manufacture of a cermet composite cathode

Powders of FeCr alloy and yttria stabilised zirconia (YSZ) are mixed with a volume ratio of approximately 1:1. The powder is pre-sintered in a dry reducing hydrogen atmosphere at 1100 °C.

The powder is then mixed into a dispersion with terpineol containing 20% Solsperse3000. The dispersion is ball-milled for 2 hours. Ethylene glucose, polyethylene glycol and graphite are added to the dispersion. The dispersion is finally ball-milled for 10 minutes.

The slurry dispersion is screen printed onto an electrolyte layer. The printing parameters are set to give a thickness of 24 µm. The layer is sintered at 1200°C for 5 hours in dry hydrogen. A well percolated and coarse porous composite backbone for the electrode is obtained, and the SOC is finalized by impregnation via vacuum assisted infiltration as outlined in Example 1.

## Claims

1. A composite oxygen electrode, comprising
- a porous backbone structure comprising two separate but percolating phases, the first phase being an electronic conducting phase, the second phase being an oxide ion conducting phase; and
- an electrocatalytic layer on the surface of said backbone structure, wherein said electrocatalytic layer comprises first and second nanoparticles, wherein the first and second particles are randomly distributed throughout said layer.

2. The composite electrode of claim 1, wherein the first nanoparticles are electrocatalytic active nanoparticles.

3. The composite electrode of claim 1, wherein the second nanoparticles are formed from an ion conducting material.

4. The composite electrode of claim 1, wherein the first nanoparticles and/or the second nanoparticles have an average particles size of from 0.1 to 500 nm.

5. The composite electrode of claim 1, wherein the first nanoparticles and/or the second nanoparticles have an average particles size of from 1 to 100 nm.

6. The composite electrode of claim 1, wherein the first phase comprises a material selected from the group consisting of La₁₋ₓSrₓMnO₃ (LSM), (Ln₁₋ₓSrₓ)ₛ(Ni_{1-y-z}Fe_{z}Co_{y})O₃ (LCN), (Ln₁₋ₓMₓ)ₛTrO₃, (Ln₁₋ₓMₓ)ₛTr₂O₄, or mixtures thereof, with Ln being any or any combination of a lanthanide element, M is any or any combination of an alkali earth metal, and Tr being any or any combination of a transition metal.

7. The composite electrode of claim 1, wherein the second phase comprises a material selected from the group consisting of ion conducting apatites, yttria, scandia or gadolinium stabilised zirconia (YSZ), doped lanthanum gallates, and yttria, Scandia or gadolinium doped ceria (CGO).

8. The composite electrode of claim 1, wherein the first nanoparticles comprise a material selected from the group of consisting of La₁₋ₓSrₓMnO₃ (LSM), (Ln₁₋ₓSrₓ)ₛ(Ni_{1-y-z}Fe_{z}CO_{y})O₃ (LCN), (Ln₁₋ₓMₓ)ₛTrO₃, (Ln₁₋ₓMₓ)ₛTr₂O₄, or mixtures thereof, with Ln being any or any combination of a lanthanide element, M is any or any combination of an alkali earth metal, and Tr being any or any combination of a transition metal.

9. The composite electrode of claim 1, wherein the second nanoparticles comprise a material selected from the group of ion conducting apatites, yttria, scandia or gadolinium stabilised zirconia (YSZ), doped lanthanum gallates, and yttria, scandia or gadolinium doped ceria (CGO).

10. A method of producing the composite electrode of claim 1, comprising the steps of:
- forming a porous backbone structure comprising two separate but percolating phases, the first phase being an electronic conducting phase, the second phase being an oxide ion conducting phase; and
- applying an electrocatalytic layer on the surface of said backbone structure, wherein said electrocatalytic layer comprises first and second nanoparticles, wherein the first and second particles are randomly distributed throughout said layer.

11. The method of claim 10, further comprising a sintering step prior to applying an electrocatalytic layer on the backbone structure.

12. The method of claim 10, wherein the electrocatalytic layer is applied in form of a suspension comprising the first and the second nanoparticles.
